# EUROPEAN PATENT APPLICATION

(11) **EP 4 123 879 A2**
(43) Date of publication of application: **25.01.2023**
(21) Application number: 22196075.0
(22) Date of filing: 01.05.2014
(51) Int. Cl.: H02K 1/24, H02K 1/04, H02K 15/02

(54) **MULTI-MATERIAL ROTOR OR STATOR FOR ELECTRICAL MACHINES AND CORRESPONDING METHOD FOR MANUFACTURING**

(30) Priority: 06.05.2013 EP 13002413
(62) Divisional of application: 14723999.0
(71) Applicant: Tata Steel UK Ltd., London SW1X 7HS (GB)
(72) Inventor: CORKERY, Denis, Velsen-Noord (NL); WOODCOCK, Mike, Velsen-Nood (NL)
(74) Representative: Wynne-Jones IP Limited

(57) **Abstract**

The invention relates to a rotor and/or stator for an electric motor or generator comprising a rotor or stator body with their respective poles, wherein the boundary between the rotor or stator body and a rotor or stator pole runs along a circular path. The invention further provides a method for manufacturing a rotor or stator for an electric motor or generator comprising a rotor or stator body and respectively rotor or stator poles wherein rotor and/or stator body laminates are joined with annular pole laminates, after which the annular pole laminates are machined to produce a multimaterial rotor and/or stator geometry.

## Description

### Field of the invention

The invention relates to rotor and stator poles for electric motors such as reluctance motors and generators, but can also be applied to other synchronous machines, a method for manufacturing such rotor and stator poles and an electric motor and generator including such a rotor and/or stator.

### Background of the invention

An electric motor, for instance a switched reluctance motor, has a stator with a number of stator poles with each pole having an electric coil. A rotor is provided with a number of rotor poles of a magnetic material, such as a soft magnetic material, embedded in a rotor body of a magnetic or non magnetic material. By energizing the coils of the stator poles a torque is generated by means of which the rotor poles align with the energized stator poles. By energizing the stator poles in a specific sequence, the rotation of the rotor is maintained.

In a specific type of switched reluctance motors, known as segmental rotor switched reluctance motors, the magnetic flux only flows through each individual rotor tooth or pole. In this case, the non-magnetic material of the rotor serves to keep the rotor poles of magnetic material isolated from each other, to provide structural strength to the rotor and to hold the rotor poles in place.

To keep the rotor poles of a magnetic material secured in the rotor body, recesses are provided in the rotor body such that a complementary shaped rotor pole of magnetic material can only be brought into such recess in a direction parallel to the rotation axis of the rotor. These recesses have for instance a key hole shape or a fir tree shape. With such recesses and complementary shaped rotor poles, the rotor poles are fixed in the radial direction.

With such a construction the rotor poles are kept firmly in place. However, in order to do so the magnetic material of a rotor pole will extend quite a distance in the radial direction into the core of the rotor which will result in a distribution of the magnetic flux well into the core of the rotor giving rise to a reduction in torque performance. This reduction can be substantial and will result in a reluctance motor with reduced operating efficiency.

The stator for in principle any type of electric machine can be made with different materials in the stator teeth and the body ('back iron') of the stator in order to improve performance or reduce the use of expensive material. However both the material in the teeth and the one in the stator body will be magnetic. In this case the stator is of a similar construction to the rotor, that is, a stator body with a number of stator poles wherein the stator poles are secured in the stator body by providing recesses in the stator body complementary to the shape of at least part of a stator pole. Also the stator poles extending into the stator body may give rise to eddy current or magnetic flux losses.

In order to control eddy current losses the rotor and stator body consists of a stack of multiple thin sheet laminates, each laminate having an electrically insulating coating on both sides. For a generator the same principles apply as described above for an electric motor.

### Objectives of the invention

It is an objective of the present invention to provide a rotor and/or a stator for an electric motor or generator which provides improved machine performance, lower costs or ease of manufacturing.

It is another objective of the present invention to provide a rotor and/or stator for an electric motor or generator which provide improved torque performance and/or energy efficiency.

It is another objective of the present invention to provide a rotor with a rotor body of a non magnetic material with rotor poles of a magnetic material, such as electrical steel, wherein the rotor poles do not extend into the rotor body.

It is another objective of the present invention to provide a stator with a stator body of a non-grain-oriented electrical steel with stator poles of a grain-oriented electrical steel or a different non-grain-oriented electrical steel.

It is another objective of the present invention to provide a rotor and/or stator wherein the poles do not extend into the rotor or stator body.

It is another objective of the present invention to provide a method to manufacture such a rotor and/or a stator with their respective poles.

It is still another objective of the present invention to provide an electric motor or generator provided with a rotor and or stator wherein the poles do not extend into the rotor or stator body.

### Description of the invention

According to a first aspect of the invention one or more of the objectives of the invention are realized by providing a rotor or stator for an electric motor or generator comprising respectively a rotor body provided with rotor poles and a stator body with stator poles, wherein the boundary between the rotor and/or stator body and the respective poles runs along one or more straight or curved lines. With this set-up it is prevented that the poles extend to a large distance into the rotor or stator body. As a result, in the case of the specific type of switched reluctance motors known as segmental rotor switched reluctance motors, the distribution of magnetic fluxes well into the core of the rotor is prevented and therewith reduction in torque performance is prevented and the operating efficiency of the electric motor or generator is improved. Moreover the construction of rotor and stator body with the respective poles is simplified.

According to a further aspect of the invention it is provided that the boundary between the rotor or stator body and a pole runs along an arc of a circle. In this manner the magnetic material such as electrical steel of the rotor poles is positioned on the outside of the rotor for an optimal interaction with the stator poles of an electric motor or generator.

Preferably the boundary between the rotor and stator body and the respective poles runs along a circle which makes the manufacture of such a rotor and/or stator far easier than with the other boundary shapes.

With the geometry of the rotor and stator body and their respective poles it is necessary that the poles are fixedly connected to the respective bodies. In order to maintain a secure connection the poles are welded to the body of the rotor and/or stator body by means of for instance electron beam welding or laser welding. A secure connection is of particular importance for motors and generators that operate at high rotational speeds, such as an electric motor used in a traction application for electric powered vehicles.

The rotor poles are made from an electrical steel, for instance M270-35A, NO20, or any other cold rolled non-oriented or grain-oriented magnetic steel sheet or strip.

The rotor body is made from a non-magnetic material for instance non-work-hardened austenitic stainless steel, or high-strength aluminium or titanium alloy.

The stator poles are made from a grain-oriented electrical steel for instance M110-27S to improve the performance of the electric motor or generator, or a non-grain-oriented electrical steel different to that for the stator body to reduce the cost or improve the performance of the electric motor or generator.

The stator body is made from a non-oriented electrical steel for instance M270-35A or NO20.

According to a further aspect of the invention the rotor and stator body and respective poles are built up from stacked laminates. The rotor and stator body are preferably formed from a stack of laminates, wherein the laminates are provided on one or both sides with an electrically insulating coating. For a secure fixed connection the rotor and stator poles are built up from laminates that each are separately connected to a laminate of the rotor or stator body. The laminates of the poles need to be stacked together as close as possible to maximise the volume of material within the stack therefore the laminates of rotor or stator body and the respective poles need to share the same thickness. The thickness of the laminates is in the range of 0.1 - 1.0 mm.

The invention also comprises a method for manufacturing a rotor or stator for an electric motor or generator comprising a rotor body of a non magnetic material and rotor poles of an electrical steel and a stator body and stator poles of an electrical steel, wherein the method comprises the steps of:
- providing rotor or stator body laminates with a circumference of one or more straight or curved lines,
- providing annular rotor pole laminates with an edge complementary to the outer circumference of the rotor body laminates and/or annular stator pole laminates with an edge complementary to the inner circumference of the stator body laminates,
- joining the annular pole laminates with the rotor and/or stator body laminates, and
- cutting or machining the annular pole laminates into separate pole elements.

Preferably the rotor and/or stator body laminates have a circular geometry since that makes the manufacturing easier and offers a more cost effective approach as opposed to a non-circular geometry. This also applies to the manufacturing of the annular pole laminates. The cutting of rotor and/or stator body laminates and the respective annular pole laminates from sheet material can be carried out by means of laser cutting, water jet cutting, electrical discharge machining or stamping. For volume production, stamping is the method of choice.

Joining a circular rotor and/or stator body laminate with a circular annular pole laminate is easier because of the simple circular path to follow for joining these laminates. However in the case the favourable direction of the electrical steel, e.g. a grain oriented steel should be utilised in the poles, many pole laminates (one for each pole) can be welded into one stator or rotor laminate. Preferably the rotor and/or stator body laminates and the respective annular pole laminates are joined by means of electron beam welding or laser welding.

The rotor and/or stator body laminates joined with the respective annular laminates are stacked. The operation of cutting or machining the combined rotor or stator body and annular pole laminates into the desired geometric profile can be executed separately for each of the laminates before stacking the laminate to form an assembly of rotor or stator body and poles or it can be carried out after stacking of the multi-material laminates. Depending on the desired geometric rotor or stator profile the cutting or machining could comprise the removal of part of the rotor or stator body laminates.

Before joining the rotor or stator body laminates and the respective annular pole laminates the rotor and/or stator body laminates are provided with an electrically insulating coating. It is also possible to apply the coating after joining the laminates although it is easier to apply the coating before joining the laminates. However, if the electrically insulating coating cannot withstand the raise in temperature resulting from the welding operation, the electrically insulating coating should be applied after joining the laminates. Since the electrically insulating coating should only be applied to the rotor and/or stator body laminates this would require additional measures for an accurate application of the coating.

The welding of the rotor or stator body laminates and the annular pole laminates could result in the accumulation of residual stresses and in order to relieve these residual stresses it is further provided that the rotor and/or stator body laminates joined with the annular pole laminates are submitted to an annealing process. If the temperature of the annealing step is too high for the electrically insulating coating, then the electrically insulating coating should be applied after the annealing step.

The invention also provides an electric motor or generator provided with a rotor and/or stator according to the invention.

### Brief description of the drawings

The invention will be further explained on hand of the example shown in the drawing, in which:
- fig. 1: shows schematically a rotor body laminate of a non magnetic material
- fig.2: shows schematically an annular laminate of a magnetic material,,
- fig.3: shows schematically a rotor body laminate joined to an annular lamina, and
- fig.4: shows schematically the joined laminates according to fig. 3 wherein the annular laminate is machined.

### Detailed description of the drawings

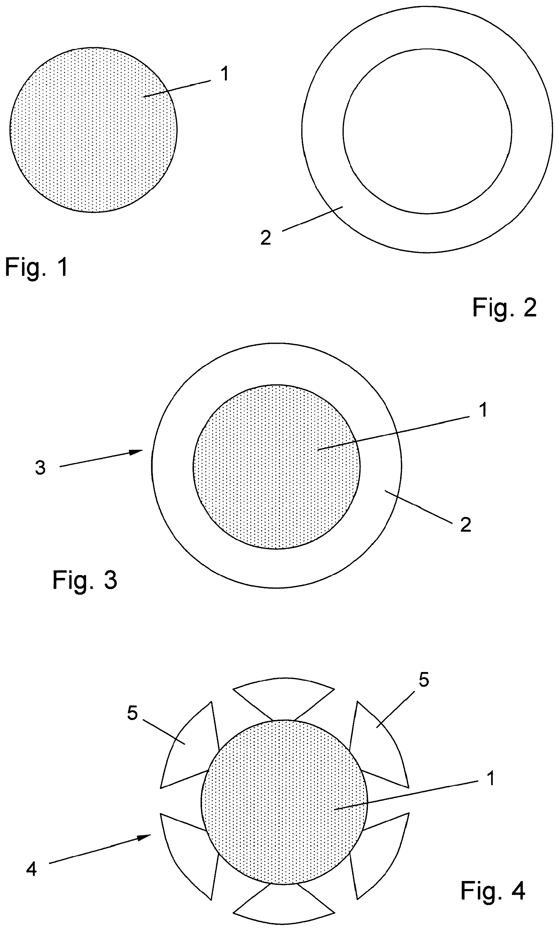

In fig. 1 and 2 show separately a rotor body laminate 1 of a non magnetic material and an annular laminate 2 of a magnetic material. These laminates 1, 2 are cut from sheet material with a thickness in the range of 0.1 - 1.0 mm. Because of the number of laminates required for a rotor this is preferably carried out by punching the laminates out of sheet material. The laminate of a non magnetic material 1 could also be made from another metal than steel, for example from aluminium.

Fig. 3 shows a rotor body laminate 1 joined with an annular laminate 2 forming a semi-finished element 3 for a finished rotor laminate 4, see fig. 4. The laminates 1 and 2 are seam welded along the circumference of the laminates, for instance by laser welding or electron beam welding to be assured to obtain a reliable weld. Instead of welding along the complete circumference it is sufficient to only weld those parts along the circumference that will form the joint between the rotor body laminate and the final rotor pole elements 5.

Fig. 4 shows a finished rotor laminate 4 with the joined laminate 1 and 2 and wherein the annular laminate 3 has been machined such that separate pole elements 5 are obtained. A rotor is assembled by stacking a number of these rotor laminates in a manner known in the art.

For a stator the construction will be similar to a large extent be it that the stator body will roughly have an annular shape with a circular inner wall with the poles at the inner side of the stator body.

## Claims

1. Rotor or stator for an electric motor or generator comprising respectively a rotor body provided with rotor poles and a stator body provided with stator poles, **characterized in that** the boundary between the rotor or stator body and the respective poles runs along one or more straight or curved lines.

2. Rotor or stator according to claim 1, wherein the boundary between the rotor or stator body and a pole runs along an arc of a circle.

3. Rotor or stator according to claim 1, wherein the boundary between the rotor or stator body and the respective poles runs along a circle.

4. Rotor or stator according to one or more of claims 1-3, wherein the poles are fixedly connected to the rotor or stator body.

5. Rotor or stator according to claim 4, wherein the poles are connected to the rotor or stator body by means of electron beam welding or laser welding.

6. Rotor according to one or more of claims 1-5, wherein the rotor body is made from non-magnetic material and the rotor poles are made from an electrical steel.

7. Stator according to one or more of claims 1-5, wherein the stator body is made from non-grain-oriented electrical steel and the stator poles are made from a grain-oriented electrical steel or a non-grain-oriented electrical steel different from the non-grain-oriented electrical steel of the stator body.

8. Rotor or stator according to one or more of claims 1-7, wherein rotor or stator body and poles are built up from stacked laminates.

9. Electric motor or generator provided with a rotor or stator according to one or more of claims 1-8.
